# EUROPEAN PATENT APPLICATION

(11) **EP 1 986 292 A1**
(43) Date of publication of application: **29.10.2008**
(21) Application number: 07106948.8
(22) Date of filing: 25.04.2007
(51) Int. Cl.: H01S 3/225

(54) **Method and system for creating a homogeneous pulsed gas discharge**

(71) Applicant: Stichting voor de Technische Wetenschappen, 3527 JP Wageningen (NL)
(72) Inventor: Peters, Peter Jacobus Maria, 7581 CL Losser (NL); Bastiaens, Hubertus Maria Jacobus, 7543 XA Enschede (NL); Boller, Klaus-Jochen, 49808 Lingen (DE); Mathew, Denny, 5643 HE Eindhoven (NL)
(74) Representative: van Loon, C.J.J.

(57) **Abstract**

The invention relates to a method and system for creating a homogeneous pulsed gas discharge, wherein the gas discharge is created between discharge electrodes in a gas mixture comprising fluorine and a rare gas, such as helium or neon, as a buffer gas, for example for use in an argon fluoride, krypton fluoride or molecular fluorine laser. The method comprises providing a discharge current in the gas mixture between the electrodes, wherein a polarity of the current is kept constant for a long time duration, e.g. for at least 80 ns, and adding xenon to the gas mixture for improving the stability of the gas discharge after initiation of the gas discharge.

## Description

The invention relates to a method for creating a homogeneous pulsed gas discharge between discharge electrodes in a gas mixture comprising fluorine and a rare gas, such as helium or neon, as buffer gas, for example for use in an argon fluoride, krypton fluoride or molecular fluorine laser.

The invention also relates to a system for creating such pulsed gas discharge.

It is known to create such gas discharge, e.g. for use in a laser, for instance in a gas mixture comprising fluorine and one or more rare gases, e.g. from K. Kakizaki et al., "High-repetition-rate (6 kHz) and long-pulse-duration (50 ns) ArF excimer laser for sub-65 nm lithography", Review of Scientific Instruments 77, 035109 (2006). The gas discharge is created by applying a voltage between the discharge electrodes. When the voltage reaches a predetermined voltage, the gas between the electrodes breaks down, the gas discharge is initiated and an electric current flows through the gas between the electrodes.

This known gas discharge is caused by a peaked-pulse-shaped voltage applied between the electrodes, causing a first peaked-pulse-shaped current through the gas, and hence a peaked-pulse gas discharge. In order to lengthen the time duration of the gas discharge, a second current pulse of reverse polarity (half-cycle) is caused to flow in the gas between the electrodes immediately following the first pulse, followed by a third current pulse of again reversed polarity. Since the gas discharge does not terminate immediately when the discharge current is zero, the gas discharges caused by the first current pulse and the successive current half-cycles, of each less than 20 ns, merge to provide a single gas discharge pulse with a duration which is longer than the first, second or third current pulse taken separately. The gas discharge will, under favorable conditions, remain homogeneous during each of the first, second or third current pulse.

It is pointed out that Kakizaki refers to a 50 ns pulse duration as a long pulse. For many applications, however, such 50 ns pulse is considered too short.

It is, therefore, an object of the invention to create a homogeneous gas discharge with a longer discharge time, e.g. for providing a laser pulse with a longer pulse duration. For the purpose of the invention 50 ns is considered a short discharge time and short laser pulse duration. Herein a long discharge time or laser pulse is at least 80 ns, preferably at least 120 ns, more preferably at least 200 ns. It is noted that it is not possible, or at least difficult, to create a gas discharge with such long discharge time by providing a succession half-cycles of alternating discharge current as disclosed by Kakizaki.

Thereto, according to the invention a method for creating a gas discharge according to claim 1 is provided.

Since the discharge current is provided having a constant polarity during a long time period the gas discharge may be sustained during the prolonged time period. The polarity of the discharge current may e.g. be kept constant for at least 80 ns, preferably for at least 120 ns, more preferably for at least 200 ns. The polarity of the discharge current may e.g. be kept constant during a substantial portion of the discharge pulse time duration, wherein the substantial portion of the discharge pulse time duration is at least 50%, more preferably at least 70%, most preferably at least 90% of the discharge pulse time duration.

Hence, it is possible to provide the gas discharge with the long discharge time.

The inventor realized that the stability and/or homogeneity of the gas discharge during such prolonged pulse duration may deteriorate with time. Right after the initiation of the gas discharge and with proper measures as for example sufficient pre-ionization of the gas mixture, the gas discharge will be quite homogeneous, providing a homogeneous glow. Later in time, however, filaments may develop in the bulk of the gas discharge, causing the homogeneity to deteriorate. Here, filaments are regions of enhanced electron density which extend as elongate threads between the electrodes. Eventually, the homogeneous glow may disappear completely, and the gas discharge may be confined to an arc. If the gas discharge is to be used in a laser system, it is to be desired that the deterioration of the homogeneity is postponed as long as possible, since the laser will only emit laser light as long as the gas discharge is homogeneous.

The inventor found that, surprisingly, addition of xenon to the gas mixture improves the stability and/or homogeneity of the gas during the later stages of the gas discharge, after the initiation of the gas discharge, in which filamentation might occur. Preferably, the xenon is added to the gas mixture in an amount of more than approximately 5 ppm and less than approximately 750 ppm.

It is known that in certain applications adding an amount of xenon to the gas mixture improves the initiation stability and reproducibility of a laser , which is believed to be caused by an improved initiation stability of the gas discharge caused by an increase in the initial electron density, i.e. at pre-ionization and initiation of the gas discharge, induced by the enhancement of photo ionization by xenon addition (Kataoka et al., "Performance Improvement of a Discharge-Pumped ArF Excimer Laser by Xenon Gas Addition", Jpn. J. Appl. Phys. Vol. 38 (1999) pp. 6735-6738). Heretofore, however, it has never been realized that the addition of xenon might also improve the stability of the gas discharge during stages of the gas discharge after the initiation of the gas discharge, rendering the addition of xenon to the gas for improving the stability and/or homogeneity of the gas discharge useful for other applications, such as the present invention.

Preferably, the discharge current is kept substantially constant during a substantial portion of the discharge pulse time duration. Hence, the gas discharge may be sustained during the prolonged pulse duration of e.g. 220 ns. The substantial portion of the discharge pulse time duration is preferably at least 50%, more preferably at least 70%, most preferably at least 90% of the discharge pulse time duration.

Preferably, the discharge current is kept substantially constant from a first moment at which the gas discharge provides a substantially homogeneous glow until the termination of the discharge pulse. Preferably, the discharge current is kept substantially constant for at least 50 ns, preferably for at least 100 ns, more preferably for at least 150 ns, most preferably for at least 200 ns. Hence, a homogeneous and/or stable gas discharge of desired time duration may be provided. Preferably, the discharge current is kept constant within 25%, preferably within 15% more preferably within 7%.

In a special embodiment of the invention the pulsed gas discharge is used for creating excimer laser light, more specifically molecular fluorine laser light or fluorine based rare-gas halide excimer laser light. Hence excimer laser light can be produced with high beam quality and/or homogeneity.

The invention will now be further elucidated, by means of nonlimiting examples, with reference to the drawing. Herein
Fig. 1 shows a schematic diagram of an excimer laser system;
Fig. 2a shows an example of a voltage applied between electrodes in the chamber of Fig 1;
Fig. 2b shows an electric current through the gas between the electrodes resulting from the voltage shown in Fig. 2a;
Fig. 2c shows an example of power deposition in the gas between the electrodes resulting from the voltage and current shown in Figs. 2a and 2b;
Fig. 3a shows a picture of a gas discharge in a gas comprising 2 bar helium and 1 mbar F₂, 30 ns after an initiation moment;
Fig. 3b shows a picture of the gas discharge of Fig. 3a 120 ns after the initiation moment;
Fig. 3c shows a picture of the gas discharge of Fig. 3a 170 ns after the initiation moment; and
Figs. 4a-4c show pictures of a gas discharge in a gas comprising 2 bar helium, 1 mbar F₂, and 0.08 mbar xenon at approximately 30 ns, 120 ns, and 170 ns after the initiation moment of the gas discharge, respectively.

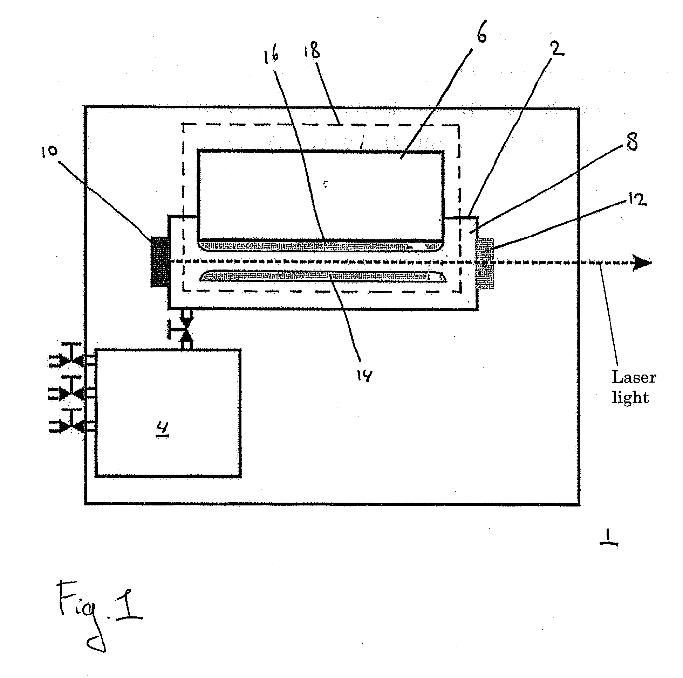

Fig. 1 shows a schematic diagram of an excimer laser system 1. In this example the laser system 1 comprises a laser chamber 2, a gas module 4 for filling and/or depleting the laser chamber with gas, and an electronic drive circuit 6.

The laser chamber 2 comprises a hollow chamber 8 filled with a gas and two mirrors 10, 12. The mirror 12, and optionally mirror 10, may be partially transmitting as known in the art. In this example the hollow chamber 8 is filled with a gas mixture comprising 2 bar helium (He) as buffer gas and 1 mbar fluorine (F2) for forming fluorine dimers required in the excimer or molecular fluorine laser. Hence, the excimer laser system 1 is a fluorine based rare-gas excimer laser system. In this entire specification, pressures, expressed in bar or mbar, are absolute pressures.

In this example the laser chamber 2 comprises two electrodes 14, 16, viz. cathode 14 and anode 16. In Fig. 1 the electronic drive circuit 6 is electrically connected to the anode 16 for applying a positive voltage to the anode 16. The general working of the excimer laser system 1 is generally known in the art and will, therefore, not be further elaborated herein.

It is noted that the hollow chamber 8 filled with the gas mixture, together with the electrodes 14, 16 and the electronic drive circuit 6 can be seen as a system 18 for creating a pulsed electrical discharge in the gas mixture. This system 18 for creating the pulsed gas discharge can be seen as a sub-system of the laser system 1.

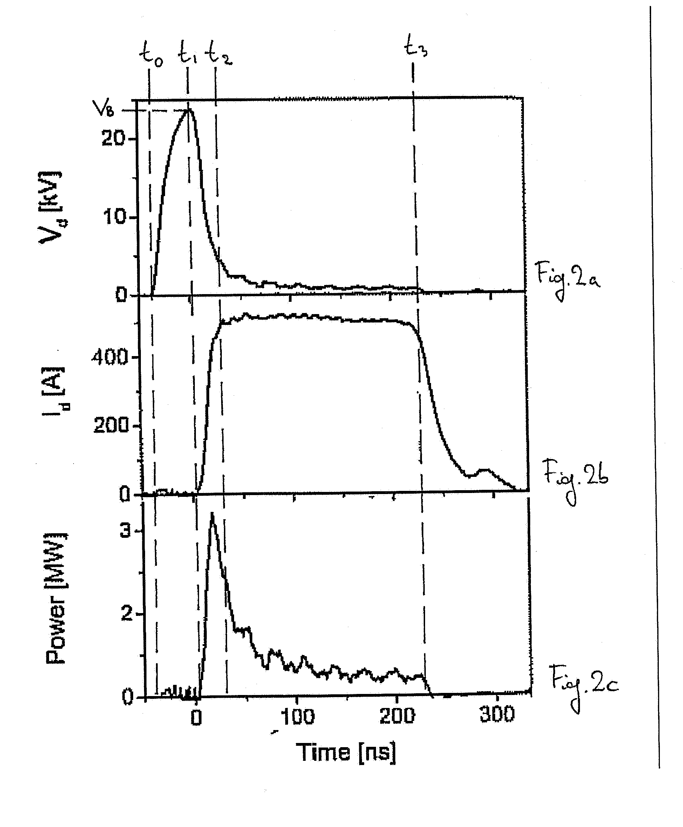

For clarity the working of the system 18 for creating the pulsed gas discharge is first described with reference to Figs. 1, 2a, 2b and 2c.

Between the discharge electrodes 14, 16 the gas mixture is provided. The drive circuit 6 creates a drive voltage V_{d} between the electrodes 14,16. When the voltage reaches a predetermined break-down voltage V_{B}, the gas between the electrodes 14,16 breaks down, the gas discharge is initiated and an electric current flows through the gas mixture between the electrodes. The gas discharge is initiated homogeneously, if proper measures like for example sufficient pre-ionization, are taken. Fig. 2a shows an example of the drive voltage V_{d} applied between the electrodes 14, 16 as a function of time. Fig. 2b shows the resulting electric current I_{d} through the gas between the electrodes 14, 16. It can be seen that from a starting moment to the voltage rises rapidly to the break-down voltage V_{B}. The break-down voltage V_{B} is reached at initiation moment t₁.

At the initiation moment t₁ the gas breaks down and current starts to flow through the gas mixture, see Fig. 2b. During a start-up period, from the initiation moment t₁ until the start t₂ of a constant current phase, the drive voltage V_{d} between the electrodes decreases, while the current I_{d} through the gas mixture increases. The period between the starting moment to and the start t₂ of the constant current phase, may be characterized as the initiation period of the gas discharge.

According to a first aspect of the invention, the drive circuit 6 keeps the electric current through the gas, i.e. the level of the electric current, substantially constant from the start t₂ of the constant current phase to an end t₃ of the constant current phase. The drive circuit 6 is thereto arranged to keep the current substantially constant. Preferably the drive circuit is arranged to keep the current constant within 25%, more preferably within 15%, most preferably within 7%. The drive circuit may for instance comprise an electric resistor, also referred to as "current limiting resistor" placed in series with the gas discharge. In the example of Fig. 2b the current I_{d} through the gas is kept constant for approximately 170 ns during the constant current phase. During the constant current phase the drive voltage V_{d} is also substantially constant in this example.

The drive circuit 6 used in this example comprises a Pulse Forming Line (PFN) to produce a substantially square shaped pulse and a fast rising high voltage pulse across the electrodes 14, 16 for the initiation of the gas discharge. The PFN is pulse first charged and then discharged to the electrodes 14, 16 by a laser triggered spark gap via a transmission line. Also alternative drive circuits that are able to generate long pulse discharges, like for example a prepulse-mainpulse excitation circuit, can be used.

At the end t₃ of the constant current phase the drive voltage is switched off. As a result, the current through the gas between the electrodes fades away.

Fig. 2c shows an example of power deposition in the gas between the electrodes as a result of the voltage V_{d} shown in Fig. 2a and the current I_{d}, shown in Fig. 2b, flowing through the gas. It can be seen from Fig. 2c that during the startup period, from t₁ to t₂, the power deposition quickly rises and falls. During the constant current phase, from t₂ to t₃, the power deposition in the gas is substantially constant. Thus, in the example of Fig. 2c a pulsed gas discharge is created with a long pulse duration, of in this example approximately 220 ns.

In the example of Fig. 2b the current through the gas is kept constant for approximately 170 ns during the constant current phase. During the constant current phase the drive voltage is also substantially constant in this example. It will be appreciated that, thus, the current is kept substantially constant during a substantial portion of the discharge pulse time duration.

It will be appreciated that it is not absolutely necessary that the current is kept substantially constant during the constant current phase. It is also possible that the polarity of the current is kept constant during the homogeneous glow, i.e. from t₂ to t₃, or preferably during the entire gas discharge pulse, from t₁ to t₃. It is, for instance, possible to provide a bell-shaped current pulse with constant polarity, e.g. with a duration of a constant current polarity phase, during which the polarity is constant, of at least 80 ns, preferably at least 120 ns, more preferably at least 200 ns. For conciseness, the constant current polarity phase will herein also be referred to as constant current phase.

The inventor found that, in creating the gas discharge pulse with the long pulse duration, e.g. the gas discharge with the pulse duration of 220 ns as described above with respect to Figs. 2a, 2b and 2c, the stability and/or homogeneity of the gas discharge might deteriorate with time.

Next a first and second experiment will be described to further elucidate the invention. Both experiments were performed using the system 18 for creating the pulsed gas discharge as described above.

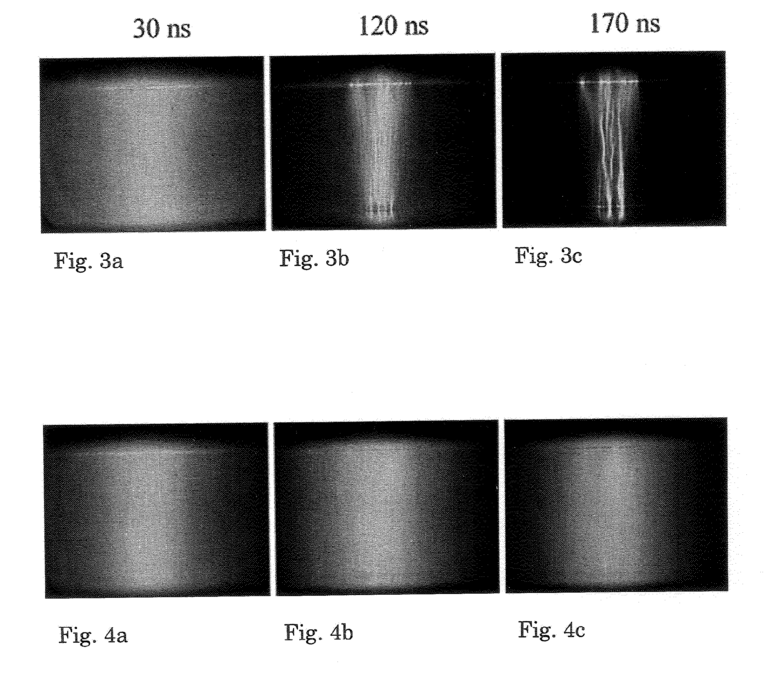

During the first experiment, wherein a pulsed gas discharge of 220 ns was created in a gas mixture comprising 2 bar helium and 1 mbar F₂, the gas discharge was observed to produce a homogeneous glow at 30 ns after the initiation moment t₁ of the gas discharge as shown in Fig. 3a. Later in time during the experiment, filaments (thin channels of enhanced electron density, extending in a direction from the cathode to the anode) developed in the bulk of the gas discharge and the homogeneity deteriorated. Fig. 3b shows filaments in the gas discharge as observed at about 120 ns after the initiation moment. At 170 ns after the initiation moment, in the experiment, the homogeneous glow disappeared completely and the gas discharge constricted to a few intense filaments as shown in Fig. 3c. The number and positions of the filaments appeared not to be reproducible.

According to a second aspect of the invention, the stability and/or homogeneity of the gas discharge during after the initiation of the gas discharge, in the examples during the constant current phase, is improved by the addition of xenon (Xe) to the gas mixture between the electrodes 14, 16.

It has heretofore been known that in certain applications adding an amount of xenon to the gas improves the initiation stability and reproducibility of a laser, which is believed to be caused by an improved initiation stability of the gas discharge caused by an increase in the initial electron density, i.e. during preconditioning (form to to t₁) and at initiation (at t₁) of the gas discharge, induced by the enhancement of photo ionization by xenon addition (Kataoka et al., "Performance Improvement of a Discharge-Pumped ArF Excimer Laser by Xenon Gas Addition", Jpn. J. Appl. Phys. Vol. 38 (1999) pp. 6735-6738). This known effect occurs during the initiation phase of the gas discharge, more specifically prior to and during break-down of the gas.

The inventor, however, found that the addition of xenon also improves the stability and/or homogeneity of the gas discharge during stages of the gas discharge after the initiation of the gas discharge, more specifically during the constant current phase, from t₂ to t₃. The inventor found that the addition of xenon also lengthens the time duration of the homogeneous glow of the gas discharge. Hence, the inventor found that xenon can also be used to improve the stability and/or homogeneity of the gas discharge in other gas discharge applications, such as in the present invention, in which the use of xenon to improve the stability and/or homogeneity of the gas discharge had heretofore never been contemplated.

Figs. 4a-4c show pictures of a gas discharge during the second experiment, wherein a pulsed gas discharge of 220 ns was created in a gas mixture comprising 2 bar helium, 1 mbar F₂, and 0.08 mbar xenon at approximately 30 ns, 120 ns, and 170 ns after the initiation moment t₁ of the gas discharge, respectively. The gas discharge was observed to produce a homogeneous glow up to the end of the constant current phase.

Thus, in the example of Figs. 4a-4c a gas discharge is created with a long pulse duration, of in this example approximately 220 ns, wherein the gas discharge is substantially homogeneous during a large part of the gas discharge duration, in this example during substantially the entire pulsed gas discharge duration. Further, in the example of Figs. 4a-4c the current through the gas is kept constant for approximately 170 ns during the constant current phase. During the constant current phase the drive voltage is also substantially constant in this example. It will be appreciated that, thus, the current is kept substantially constant during a substantial portion of the discharge pulse time duration.

In the example the current is kept substantially constant for approximately 170 ns. It will be appreciated that other time durations of the constant current phase may be chosen. Preferably, the discharge current is kept substantially constant for at least 50 ns, more preferably for at least 100 ns, even more preferably for at least 150 ns, most preferably for at least 200 ns.

Now referring back to Figs. 1, 2a, 2b and 2c, it will be appreciated that the homogeneous pulsed gas discharge with the long pulse duration as described above can be used in the excimer laser system 1 for creating excimer laser light. Here it is noted that, in practice, only the homogeneous glow of the gas discharge pulse can be used for creating the excimer laser light. Thus, when creating excimer laser light by providing the long pulse duration gas discharge in the gas mixture comprising fluorine and one or more rare gases by e.g. keeping the current through the gas between the electrodes substantially constant during a substantial portion of the discharge pulse time duration, according to the first aspect of the invention, it is essential to prevent (or at least diminish) deterioration of the homogeneity of the discharge during the constant current phase by adding an amount of xenon to the gas, according to the second aspect of the invention.

It will be appreciated that the invention can be practiced more generally than described above with respect to the enclosed figures.

It is for instance possible that neon (Ne) is chosen as buffer gas instead of helium.

Further, it has been found that the addition of approximately 5 ppm of xenon to the gas (e.g. 0.013 mbar of xenon in 2 bar gas mixture) already improves the stability and/or homogeneity of the gas discharge during the constant current phase. It is noted that in the example of Fig. 4a-4c approximately 40 ppm of xenon was added to the gas (0.08 mbar of xenon in 2 bar gas mixture). It appears that the more xenon is added to the gas, the stability and/or homogeneity of the gas discharge, is improved more or for a longer time duration. Addition of amounts of xenon to the gas in excess of 2000 ppm, possibly in excess of 750 ppm (e.g. 1.5 mbar of xenon in 2 bar gas mixture), appear to have no further enhancing effect on the stability and/or homogeneity.

In the examples the gas mixture comprised 2 bar helium (He) as buffer gas with 1 mbar fluorine (F₂), and an amount of xenon added. It is also possible that the gas comprises more or less fluorine, e.g. between 100-2000 ppm of fluorine. It is also possible that the gas mixture comprises a certain amount of argon such as in gas mixtures used in argon fluoride lasers or a certain amount of krypton such as in gas mixtures used in krypton fluoride lasers, e.g. by addition of 5000 - 75000 ppm of argon or krypton, e.g. approximately 30000 ppm of argon or krypton (e.g. 60 mbar of argon or krypton in 2 bar of gas mixture). In the latter gas mixtures, the addition of approximately 265 ppm of xenon (e.g. corresponding to 0,53 mbar of xenon in a 2 bar gas mixture) proves to be very effective. It is noted that in the gas mixture comprising argon or krypton, it may be required to add a larger amount of xenon than in the gas mixture comprising only fluorine and the buffer gas, to obtain a comparable effect of the xenon.

In the examples the gas between the electrodes has a pressure of approximately 2 bar. It is also possible that the pressure is lower or higher, e.g. between 1-5 bar.

All these variations are understood to fall within the scope of the invention.

## Claims

1. Method for creating a homogeneous pulsed gas discharge, wherein the gas discharge is created between discharge electrodes in a gas mixture comprising fluorine and a rare gas, such as helium or neon, as a buffer gas, for example for use in an argon fluoride or krypton fluoride or molecular fluorine laser, the method comprising:
providing a discharge current in the gas mixture between the electrodes wherein a polarity of the discharge current is kept constant for a long time duration; and
adding xenon to the gas mixture for improving the stability and/or homogeneity of the gas discharge after initiation of the gas discharge.

2. Method according to claim 1, wherein the polarity of the discharge current is kept constant for at least 80 ns, preferably for at least 120 ns, more preferably for at least 200 ns.

3. Method according to claim 1 or 2, wherein the polarity of the current is kept constant during a substantial portion of the gas discharge pulse time duration.

4. Method according to any one of the preceding claims, wherein the discharge current is kept substantially constant during a substantial portion of the discharge pulse time duration.

5. Method according to claim 4, wherein the discharge current is kept substantially constant from a first moment at which the gas discharge provides a substantially homogeneous glow until the termination of the discharge pulse.

6. Method according to claim 4 or 5, wherein the discharge current is kept substantially constant for at least 50 ns, preferably for at least 100 ns, more preferably for at least 150 ns, most preferably for at least 200 ns.

7. Method according to any one of claims 4-6, wherein the discharge current is kept constant within 25%, preferably within 15% more preferably within 7%.

8. Method according to any one of claims 4-7, wherein the discharge current is kept substantially constant using at least one electric resistor in series with the gas discharge.

9. Method according to any one of the preceding claims, wherein the discharge time duration is at least 80 ns, preferably at least 120 ns, more preferably at least 200 ns.

10. Method according to any one of the preceding claims, wherein the gas mixture comprises approximately 100-2000 ppm fluorine and optionally approximately 5000-75000 ppm argon or krypton, preferably approximately 500 ppm fluorine and optionally approximately 30000 ppm argon or krypton.

11. Method according to any one of the preceding claims, wherein a pressure of the gas mixture is 1-5 bar, preferably approximately 2 bar.

12. Method according to any one of the preceding claims, wherein the xenon is added to the gas mixture in an amount of at least 5 ppm, preferably at least 40 ppm.

13. Method according to, any one of the preceding claims, wherein the xenon is added to the gas mixture in an amount of approximately 265 ppm.

14. Method according to any one of the preceding claims, wherein the xenon is added to the gas mixture in an amount of at most 2000 ppm, preferably at most 750 ppm.

15. Method according to any one of the preceding claims, wherein the pulsed gas discharge is used for creating excimer laser light.

16. System for creating a homogeneous pulsed gas discharge in a gas mixture, comprising
discharge electrodes for creating the gas discharge there between;
wherein the gas mixture is placed between the electrodes and comprises fluorine and a rare gas, such as helium or neon, as a buffer gas, for example for use in an argon fluoride or krypton fluoride or molecular fluorine excimer laser, and xenon for improving the stability and/or homogeneity of the gas discharge after initiation of the gas discharge; wherein the system further comprises
an electronic drive circuit for providing a discharge current through the gas between the electrodes, wherein the drive circuit is arranged providing a discharge current in the gas mixture between the electrodes wherein a polarity of the discharge current is kept constant for a long time duration.

17. System according to claim 16, wherein the drive circuit is arranged for keeping the polarity of the discharge current constant for at least 80 ns, preferably for at least 120 ns, more preferably for at least 200 ns.

18. System according to claim 16 or 17, wherein the drive circuit is arranged for keeping the polarity of the current constant during a substantial portion of the gas discharge pulse time duration.

19. System according to any one of claims 16-18, wherein the drive circuit is arranged for keeping the discharge current substantially constant during a substantial portion of the discharge pulse time duration.

20. System according to claim 19, wherein the drive circuit is arranged for keeping the discharge current substantially constant from a first moment at which the gas discharge provides a substantially homogeneous glow until the termination of the discharge pulse.

21. System according to claim 19 or 20, wherein the drive circuit is arranged for keeping the discharge current substantially constant for at least 50 ns, preferably for at least 100 ns, more preferably for at least 150 ns, most preferably for at least 200 ns.

22. System according to any one of claims 19-21, wherein the drive circuit is arranged for keeping the discharge current constant within 25%, preferably within 15%, more preferably 7%.

23. System according to any one of claims 19-22, wherein the drive circuit comprises at least one electric resistor in series with the gas discharge for keeping the discharge current substantially constant.

24. System according to any one of claims 19-23, wherein the gas mixture comprises approximately 100-2000 ppm fluorine and optionally approximately 5000-75000 ppm argon or krypton, preferably approximately 500 ppm fluorine and optionally approximately 30000 ppm argon or krypton.

25. System according to any one of claims 19-24, wherein, in use, a pressure of the gas mixture is 1-5 bar, preferably approximately 2 bar.

26. System according to any one of claims 19-25, wherein the gas mixture comprises xenon in an amount of at least 5 ppm, preferably at least 40 ppm.

27. System according to any one of claims 19-26, wherein the gas mixture comprises xenon in an amount of approximately 265 ppm.

28. System according to any one of claims 19-27, wherein the gas mixture comprises xenon in an amount of at most 2000 ppm, preferably at most 750 ppm.

29. System according to any one of claims 19-28, wherein the gas mixture and electrodes are part of an excimer laser cavity for using the pulsed gas discharge for creating excimer laser light.

30. Use of xenon for improving the stability and/or homogeneity of a pulsed gas discharge after initiation of the gas discharge in a gas mixture comprising fluorine and a rare gas, such as helium or neon, as a buffer gas.

31. Use of xenon for improving the stability and/or homogeneity of a pulsed gas discharge during a period in which a discharge current of the gas discharge is kept substantially constant in a gas mixture comprising fluorine and a rare gas, such as helium or neon, as a buffer gas.

32. Use of xenon for improving the stability and/or homogeneity of a pulsed gas discharge after initiation of the gas discharge in a gas mixture comprising fluorine and at least one rare gas, such as helium or neon as a buffer gas and optionally argon or krypton, in an excimer laser system, such as an argon fluoride, krypton fluoride or molecular fluorine laser system.
